# EUROPEAN PATENT APPLICATION

(11) **EP 1 309 143 A2**
(43) Date of publication of application: **07.05.2003**
(21) Application number: 02024275.6
(22) Date of filing: 31.10.2002
(51) Int. Cl.: H04L 12/64

(54) **Packet communication system and method**

(30) Priority: 31.10.2001 JP 2001333615
(71) Applicant: NEC CORPORATION, Tokyo (JP)
(72) Inventor: Ando, Takeshi, c/o NEC Communication Systems, Ltd., Tokyo (JP); Oizumi, Yasuhiro, NEC Communication Systems, Ltd., Tokyo (JP); Katsuoka, Eiki, NEC Communication Systems, Ltd., Tokyo (JP); Raiju, Kouichi, NEC Communication Systems, Ltd., Tokyo (JP)
(74) Representative: Betten & Resch

(57) **Abstract**

A packet communication system capable of realizing a system having superior impartiality of throughput between flows without degradation of switch characteristics is provided. Shaping weight calculating portions 13-1 to 13-n calculate rates by using feedback type rate control system. In-padding information inserting portions 11-1 to 11-n input information required between IF portions 1-1 to 1-n to padding portions. In-padding information extracting portions 15-1 to 15-n extract necessary information received from a switch portion 2. Internal communication packet producing portions 12-1 to 12-n produce internal packets for transmitting information when there is no padding occurred. Internal communication packet extracting portions 14-1 to 14-n extract information from the internal packets.

## Description

### BACKGROUND OF THE INVENTION

### 1. Field of the Invention

The present invention relates to a packet communication system and a packet communication method for use in the same system and, particularly, the present invention relates to a transmission method of small capacity, non-real time data for performing a flow rate control in a packet communication system and improving an ATM (Asynchronous Transfer Mode) transmission efficiency.

### 2. Description of the Related Art

One of conventional packet communication systems of such kind uses an IP (Internet Protocol), which is a combination of an ATM switch and an IP router.

The IP switch can be functionally divided to an interface portion (referred to as IF portion, hereinafter) having a large scale input/output packet buffer and a switch portion. The switch portion has a switching function of switching an input packet and the highest processing speed of the switch portion is requested among other devices. However, it is very difficult to provide a buffer having a large scale and complicated control function in the switch portion.

The IF portion has a large scale input/output buffer, which can not be provided easily in the switch portion, an input buffer for performing a scheduling in the switch portion and an output scheduling function including a priority control according to service quality required correspondingly to the flow, a packet flow rate regulation control according to predetermined band and a BP (Back Pressure) control for stopping an output of packet to a specific circuit in unit of QoS (Quality of Service) class according to a state of packet accumulation in the input buffer.

As the control of QoS in the ATM switch, there is an ER (Explicit Rate) control for explicating presence or absence of traffic congestion or permitted route of transmission. It has been known that the ER control is effective in views of transient response after occurrence of congestion and equitability of throughput.

As a calculation system of ER, a DPDC (Dual Proportional Differential Controller) system for deriving ER with which an amount of accumulation in a buffer is stabilized in time from a feedback control is proposed in "Proposal of Large Scale Multi QoS Switch Architecture", M. Shinohara et al. Electronics, Information and Communication Society Technical Report SSE 96-55, August 20, 1996.

Even when this system is used, there is a problem that, if the IF portions perform controls independently, ER value is different for every IF portion by BP controls from input buffers of the IF portions though destinations of the respective IF portions are identical. That is, when there is a partiality of the number of flows having the same destinations to some IF portion, it becomes impossible to maintain the impartiality of throughput between the flows.

In order to maintain the impartiality of throughput between the flows, an internal rate control system for performing ER control by utilizing ER control and harmonizing between the IF portions has been proposed. Further, WO 97/26739 proposes a system for realizing the internal rate control system without adverse influence on user traffic in ATM, in which cells for internal communication are produced and performing a communication between IF portions by utilizing empty region.

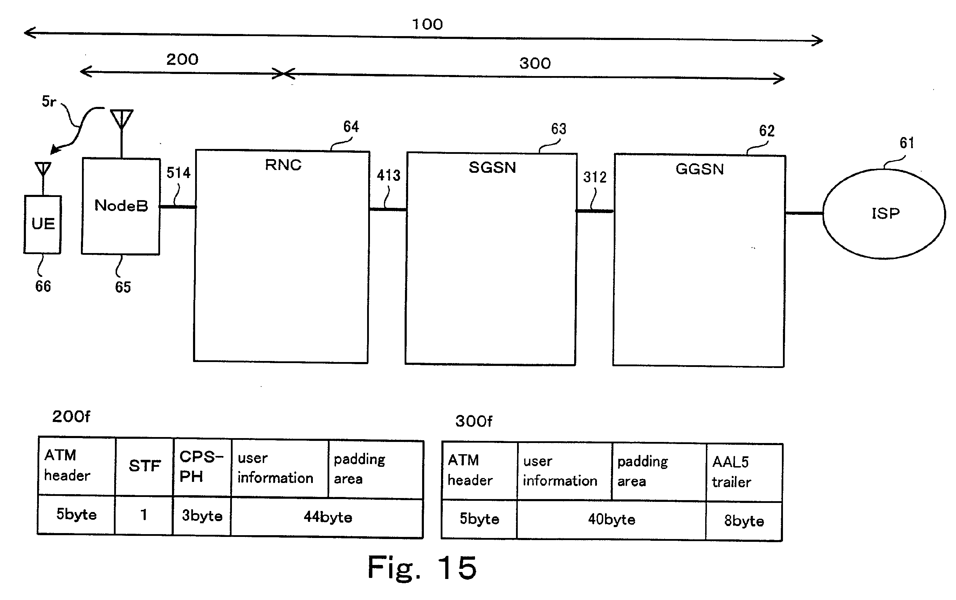

On the other hand, in a mobile telecommunication system whose standardization is having promoted by 3GPP (3rd Generation Partnership Project), data transmission of packet type U-plane (User-plane) and C-plane (Control-plane) is performed as shown in FIG. 15.

In FIG. 15, the packet type mobile telecommunication system 100 is constructed with a GGSN (Gateway GPRS Support Node) 62 for performing a gateway switching between a mobile packet communication network and another packet communication network, a SGSN (Serving GPRS Support Node) 63 for establishing a communication between mobile subscribers or between a mobile subscriber and a fixed network subscriber, a RNC (Radio Network Controller) 64 for establishing a communication to a radio base station (NodeB) 65 and controlling a switching of communication between mobile subscribers or between a mobile subscriber and a fixed network subscriber and a channel switching, the radio base station 65 for establishing a radio communication to a mobile telephone terminal UE (User Equipment) 66 in a service area and the mobile telephone terminal 66 owned by a subscriber.

Although the packet type mobile telecommunication system 100 includes a plurality of GGSNs, a plurality of SGSNs, a plurality of RNCs and a plurality of NodeBs and provides the packet type mobile telecommunication services, these are not shown in FIG. 15 for simplicity of description. Further, another packet switching network for which the GGSN performs a gateway switching is shown as ISP (Internet Service Provider) 61.

In FIG. 15, when a packet is transmitted from the ISP 61 to the mobile telephone terminal 66, a packet transmitted from the ISP 61 to the GGSN 62 is transformed, in the GGSN 62, to AAL type 5 format 300f defined in ITU-T (International Telecommunication Union - Telecom standardization) I.363.5 [B-ISDN ATM Adaptation Layer (AAL) Specification:Type5 AAL] and transmitted to the SGSN 63 through an ATM transmission path 312 and then to the RNC 64 through an ATM transmission path 413.

The ATM cell of the AAL type 5 format 300f is transformed, in the RNC 64, to AAL type 2 format 200f defined in ITU-T I.363.2 [B-ISDN ATM Adaptation Layer Specification:Type2 AAL] and transmitted to the radio base station 65 through an ATM transmission path 514.

The radio base station 65 extracts a user information from a user information area of the AAL type 2 format 200f and transmits the packet to the mobile telephone terminal 66 through a radio transmission path 5r.

In order to simplify the description, FIG. 15 shows a case where the user information of the AAL type 5 format 300f transmitted in the AAL type 5 transmission path section 300 and the AAL type 5 format 200f transmitted in the AAL type 2 transmission path section 200 are contained in respective ATM cells and transmitted.

The AAL type 5 format 300f is composed of an ATM header (5 bytes), a user information + padding area (40 bytes) and an AAL 5 trailer (8 bytes) and the AAL type 2 format 200f is composed of an ATM header (5 bytes), an STF (1 byte), a CPS-PH (3 bytes) and a user information + padding area (44 bytes).

In the packet type mobile telecommunication system 100, the user information of the packet is stored in the user information area of the AAL type 5 format 300f in the AAL type 5 system transmission section from GGSN 62 through the SGSN 63 to the RNC 64 and, when the user information is smaller than 40 bytes, padding data is inserted into the padding area.

In the AAL type 2 system transmission section 200 between the RNC 64 and the radio base station 65, the user information of the AAL type 2 format 200f is stored in the user information area of the AAL type 2 format 200f and, when the user information is smaller than 44 bytes, padding data is inserted into the padding area.

In the conventional packet communication system mentioned above, it is possible to perform the flow rate control in the IP switch by applying the conventional system used in the ATM. However, when the IP switch is used, there is a problem to be described below.

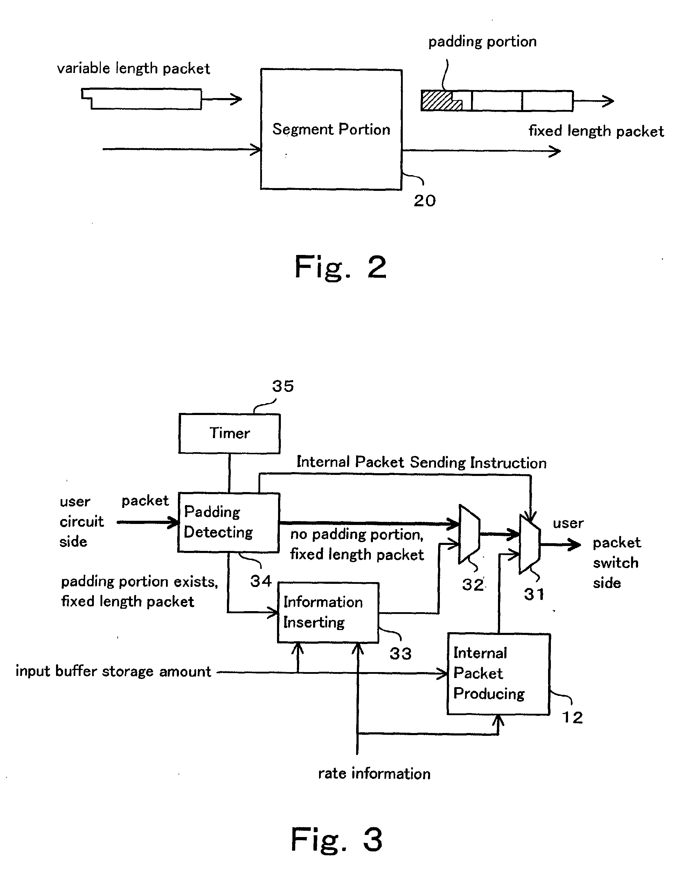

The main stream of the current IP packet switch system is a fixed length switching system in which the switching is performed after segmentation to a fixed length packet. When this system is used and a variable length packet of 129 bytes is inputted with the fixed length packet size being 128 bytes as shown in FIG. 3, a total length becomes 128 bytes + 1 byte + 127 bytes, so that it is necessary to add dummy data of 127 bytes. The addition of dummy data is referred to as "padding".

Therefore, the throughput of the IP switch becomes 129/(128×2) ≒ 50%. From this, it is clear that a switch capacity required is twice a total input circuit capacity. However, since there is substantially no case where the minimum condition practically occurs continuously, it is not necessary to have the switch capacity, which is twice the total input circuit capacity.

As such, the rate control is performed under collaboration of the respective IF portions in the IP switch whose empty band is not enough. Therefore, when the system in which a communication is performed between the IF portions by producing packets for internal communication is used, a certain constant band in the IP switch is occupied by the packet for internal communication, resulting in that throughput of the user traffic is lowered.

Since, when the flow rate control is performed under collaboration of the IF portions by the IP packet, means for performing a communication of required information without degradation of characteristics within the IP switch, that is, without lowering the throughput of the user traffic is poor, this method is not realized practically.

On the other hand, the user information transmitted from the ISP 61 to the mobile telephone terminal 66, which is serviced in the packet type mobile telecommunication system 100, may be one requiring a real time service such as Internet or moving picture service, one not always requiring a real time service such as advertisement information, weather information or news to unspecified subscribers, one having large amount of data or one having small amount of data.

However, all of these user information are stored in the user information areas of the AAL type 5 format 300f in the AAL type 5 system transmission section 300 and the AAL type 2 format 200f in the AAL type 2 system transmission section 200, respectively, and the padding data is inserted into the padding portion of the ATM cell whose number of bytes is smaller than the predetermined number.

Since, therefore, there may be a case where the padding data in addition to the user information to be transmitted for supply of the current services are must be transmitted to the mobile telephone terminal 66, the ATM transmission efficiency as the system is lowered with increase of the amount of the padding data compared with the amount of the user information, which is to be transmitted primarily.

Particularly, when a user information having a capacity smaller than a padding data capacity is ATM transmitted frequently in one ATM cell, the ATM transmission efficiency is lowered.

In order to improve such ATM transmission efficiency by even a little, it may be effective to fill the padding portion with not the padding data but a user information other than the user information to be transmitted for the current service or a system information, transform it to an ATM cell and transmit it. However, there is no means for realizing such scheme in the packet type mobile telecommunication system 100.

### SUMMARY OF THE INVENTION

An object of the present invention is to provide a packet communication system capable of realizing superior impartiality of throughput between flows without degradation of the switch characteristics and a packet communication method using the same packet communication system.

Another object of the present invention is to provide a packet communication system, which can use a padding portion efficiently and can improve the ATM transmission efficiency, and a packet communication method using the same packet communication system.

According to the present invention, a packet communication system for transferring a packet data by adding dummy data to an empty area of the packet data comprises, in each of constitutional devices of the system, means for inserting an information transferred between at least the constitutional devices of the system into a padding portion to which the dummy data is added and transferring it and means for extracting the information transferred by the constitutional devices from the padding portion of the transferred packet data.

Another packet communication system according to the present invention comprises, in each of a plurality of interface portions, in-padding information inserting means for inserting an information necessary for an internal rate control into a padding portion to which dummy data of an IP packet is added, in-padding information extracting means for extracting the information inserted into the padding portion and shaping weight calculation means for performing a rate calculation on the basis of the information extracted by the in-padding information extracting means, wherein the information necessary for internal rate control is transmitted between the plurality of the interface portions by using the padding portion.

Another packet communication system according to the present invention for performing ATM (Asynchronous Transfer Mode) data transmission by using a mobile packet communication network for establishing a communication between mobile subscribers and a communication between the mobile subscriber and a fixed network subscriber, a gateway mobile communication network for performing a gateway switching between the mobile packet communication network and another packet communication network and a radio network control device for performing a connection and a channel switching of the communication between the mobile subscribers and the communication between the mobile subscriber and the fixed network subscriber by establishing a communication with a radio base station comprises an information storage center for storing at least one of a non-real time, small capacity user information and a system information and a storage device provided in each of the gateway mobile communication network, the mobile packet communication switch and the radio network control device, for storing at least one of the non-real time, small capacity user information and the system information, an information transmitted from either the information storage center or the storage device being stored in the storage device as a stored information.

A packet communication method according to the present invention for transferring a packet data by adding dummy data to an empty area of the packet data comprises, in each of devices constituting a system, the step of inserting at least an information transferred between the constituting devices into a padding portion to which the dummy data is added and transferring it and the step of extracting the information transferred between the constituting devices from the padding portion of the transferred packet data.

Another packet communication method of the present invention comprises, in each of a plurality of interface portions, the step of inserting an information necessary to perform an internal rate control into a padding portion of an IP packet, to which dummy data is added, the step of extracting the information inserted into the padding portion of the IP packet and the step of performing a rate calculation on the basis of the extracted information, the information necessary to perform the internal rate control being transmitted between the plurality of the interface portions by using the padding portion.

Another packet communication method of the present invention for performing ATM (Asynchronous Transfer Mode) data transmission by using a mobile packet communication network for establishing a communication between mobile subscribers and a communication between the mobile subscriber and a fixed network subscriber, a gateway mobile communication network for performing a gateway switching between the mobile packet communication network and another packet communication network and a radio network control device for performing a connection and a channel switching of the communication between the mobile subscribers and the communication between the mobile subscriber and the fixed network subscriber by establishing a communication with a radio base station comprises an information storage center for storing at least one of a non-real time, small capacity user information and a system information and a storage device provided in each of the gateway mobile communication network, the mobile packet communication switch and the radio network control device, for storing at least one of the non-real time, small capacity user information and the system information, an information transmitted from either the information storage center or the storage device being stored in the storage device as a stored information.

That is, according to the packet communication system of the present invention, it becomes possible to perform the rate control without lowering of throughput of a user traffic by performing a communication by inserting an information necessary between the respective interface portions into the padding portion produced in producing a segment for switching the IP packet by a fixed length switch.

When the padding is not produced, the rate control is performed by producing a packet for an internal communication and performing a communication of the information necessary for the respective interface portions. In such case, since no padding is produced, an empty area is provided in the switch. Therefore, it becomes possible to perform a communication without using an extra band in the switch, so that it becomes possible to perform the rate control without lowering the throughput of the user traffic.

In more detail, in the packet communication system of the present invention, the padding is performed on demand when a segment portion segments the IP packet to produce the fixed length packet. An in-padding information inserting portion inserts the storage amount if an input buffer and the rate information from a shaping weight calculating portion into the padding portion.

In a case where there is no padding portion when a communication of information is performed, a packet for communication of a necessary information is produced by an internal packet producing portion. In such case, since there is no padding produced, an empty band is provided in the switch and, by utilizing the empty band, a communication becomes possible without using an extra band in the switch. Therefore, it does not influence on the user traffic. Consequently, a system having superior impartiality of throughput between flows can be provided without degradation of the switch characteristics.

In the in-padding information extracting portion, the information necessary for the rate control is extracted from the padding portion of the received packet. In the internal packet extracting portion, the information necessary for the rate control is extracted from the received internal packet. The shaping weight calculating portion calculates the rate on the basis of the extracted information.

On the other hand, another packet communication system of the present invention is a packet type mobile telecommunication system in which data is transmitted in ATM (Asynchronous Transfer Mode) featured by that, even in a case where the padding portion to which padding data is to be inserted is inserted when a user information to be transmitted for supplying a current service is transformed to an ATM cell, transmission rate of the padding data is reduced as low as possible to improve the ATM transmission efficiency as a system.

In order to improve the ATM transmission efficiency, another packet communication system of the present invention comprises an information storage center and storage devices included in a GGSN (Gateway GPRS Support Node) for performing a gateway switch between a mobile packet communication network and another packet communication network, an SGSN (Serving GPRS Support Node) for establishing a communication between mobile subscribers or a communication between a mobile subscriber and a fixed network subscriber and a RNC (Radio Network Controller) for controlling a connection or a channel switching of the communication between the mobile subscribers or the communication between a mobile subscriber and a fixed network subscriber by establishing a communication to a radio base station.

Each of these storage devices includes means for storing a non-real time, small capacity user information or a system information transmitted from the information storage center or from the storage devices mutually as a stored information.

The GGSN stores the user information received from ISP (Internet Service Provider) for supplying a current service in a user information area of AAL (ATM Adaptation Layer) type 5 format and, when the information is transformed to ATM cell, determines whether or not a padding portion to which a padding data is to be inserted exists in the ATM cell. When there is no padding portion, the GGSN transmits the produced ATM cell to the SGSN as it is and, when the padding portion exists, the GGSN extracts a stored information, which can be inserted into the padding portion, from the storage device, stores it in the padding portion of AAL type 5 format, produces the ATM cell and transmits it to the SGSN.

The SGSN determines whether the information in the padding portion of the ALL type 5 format received from the GGSN is a padding data, a stored information having destination to the SGSN or a stored information having destination to other than SGSN. When it is the padding data, the SGSN extracts a stored information, which can be inserted into the padding portion in lieu of the padding data from the storage device and stores it in the padding portion of AAL type 5 format. Therefore, the SGSN produces the ATM cell and then transmits it to the RNC.

When the information is a stored information having destination to the SGSN, the SGSN derives the stored information from the padding portion of AAL type 5 format, stores it in the storage device. Then, the SGSN extracts a stored information, which can be inserted into the padding portion in lieu of the derived stored information, stores it in the padding portion of AAL type 5 format. Thereafter, the ATM cell is produced and then transmits it to the RNC. When the stored information has a destination to other than SGSN, the SGSN transmits it to the RNC as it is.

When the ATM cell of AAL type 5 format received from the SGSN is transformed to the ATM cell of AAL type 2 format, the RNC determines whether the information in the padding portion of AAL type 5 format received from the SGSN is a padding data, a stored information having destination to the RNC or a stored information having a destination to other than RNC.

When the information in the padding portion is a padding data, the RNC extracts a stored information, which can be inserted into the padding portion in lieu of the derived stored information, stores it in the padding portion of AAL type 2 format. Thereafter, the ATM cell is produced and then the RNC transmits it to the radio base station.

When the stored information has a destination to the RNC, the RNC derives the stored information from the padding portion of AAL type 5 format and stores it is the storage device. Thereafter, the RNC extracts a stored information, which can be inserted into the padding portion in lieu of the derived stored information, from the storage device and stores it in the padding portion of AAL type 2 format. Thereafter, the ATM cell is produced and then the RNC transmits it to the radio base station. When the stored information has a destination to other than the RNC, the RNC stores it in the padding portion of AAL type 2 format as it is and transmits it to the radio base station.

When the user information to be transmitted in order to supply the current service is extracted from the user information area of AAL type 2 format received from the RNC, the radio base station determines whether the information in the padding portion of AAL type 2 format received from the RNC 4 is a padding data or a stored information having a destination to a mobile telephone terminal.

When it is the padding data, the radio base station transmits the extracted user information to the mobile telephone terminal through a radio transmission path as it is and, when it is a stored information to a mobile telephone terminal, the radio base station extracts a stored information from the padding portion of AAL type 2 format and transmits it together with the user information to be transmitted primarily to the mobile telephone terminal through a radio transmission path.

When the processing of the user information received from the radio base station and to be supplied with the current service is performed, the mobile telephone terminal performs a processing of the stored information also transmitted therewith.

According to another aspect of the present invention, a system having superior ATM transmission efficiency is realized by, in order to reduce the transmission rate of padding data of an ATM cell in a packet type mobile telecommunication system in which data is transmitted according to ATM system, inserting a user information to be transmitted primarily to supply a current service in a user information area of AAL type format in a conventional manner and a user information different from the user information to be transmitted primarily or a system information into a padding portion to form and transmit an ATM cell to thereby effectively utilize the padding portion.

Incidentally, since it is necessary to preliminarily store data in the devices of the GGSN, the SGSN and the RNC, the user information or the system information inserted into the padding portion should be an information having no real time request or an information, which has a small capacity capable of being inserted into the padding portion. Therefore, an information, which has small capacity and non-real time nature is optimal.

### BRIEF DESCRIPTION OF THE DRAWINGS

Specific embodiments of the present invention will now be described, by way of example only, with reference to the accompanying of drawings in which:
FIG. 1 is a block diagram showing a construction of a packet communication system according to an embodiment of the present invention;
FIG. 2 shows an operation of a segment portion;
FIG. 3 is a block diagram showing a construction of an in-padding information inserting portion;
FIG. 4 is a block diagram showing a construction of a shaping weight calculation portion;
FIG. 5 is a flowchart showing an operation of a packet communication system according to an embodiment of the present invention;
FIG. 6 is a flowchart showing an operation of a packet communication system according to an embodiment of the present invention;
FIG. 7 is a flowchart showing an operation of a packet communication system according to an embodiment of the present invention;
FIG. 8 is a flowchart showing an operation of a packet communication system according to an embodiment of the present invention;
FIG. 9 is a block diagram showing a construction of a packet type mobile telecommunication system according to an embodiment of the present invention;
FIG. 10 is a block diagram showing a construction of a packet type mobile telecommunication system according to an embodiment of the present invention;
FIG. 11 is a block diagram showing a construction of a packet type mobile telecommunication system according to another embodiment of the present invention;
FIG. 12 is a block diagram showing a construction of a packet type mobile telecommunication system according to another embodiment of the present invention;
FIG. 13 is a block diagram showing a construction of a packet type mobile telecommunication system according to another embodiment of the present invention;
FIG. 14 is a block diagram showing a construction of a packet type mobile telecommunication system according to another embodiment of the present invention; and
FIG. 15 is a block diagram showing a construction of a conventional packet type mobile telecommunication system.

### DETAILED DESCRIPTION OF THE PREFERRED EMBODIMENTS

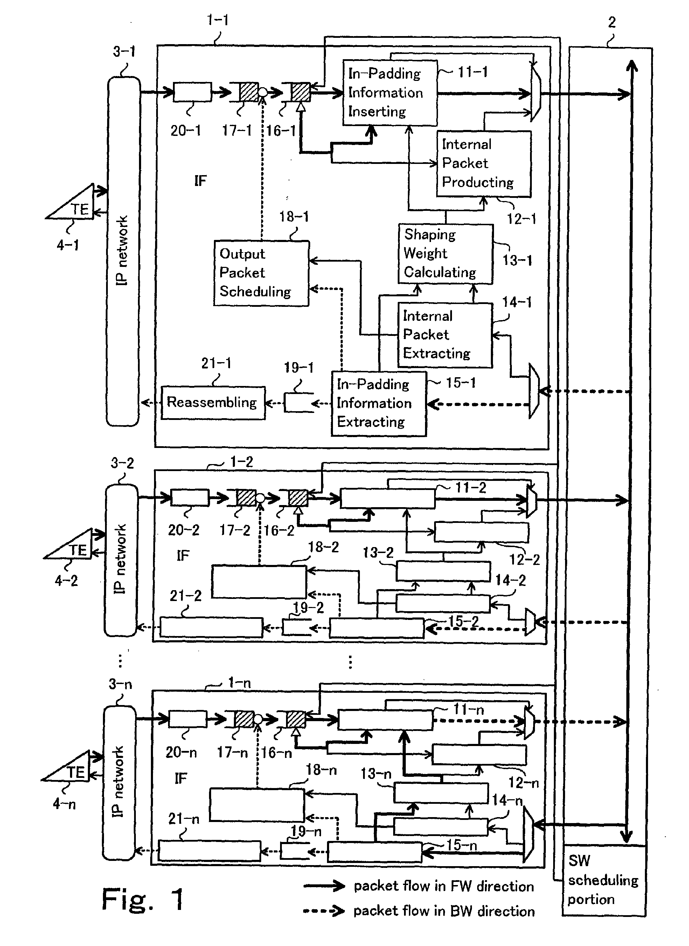

Preferred embodiments of the present invention will be described with reference to the drawings. FIG. 1 is a block diagram showing a construction of a packet communication system according to an embodiment of the present invention. In FIG. 1, the packet communication system is used for a flow rate control of an IP packet.

The packet communication system is constructed with interface portions (IF portions) 1-1 to 1-n, a switch (SW) portion 2, IP networks 3-1 to 3-n and terminals 4-1 to 4-n.

The IF portions 1-1 to 1-n are constructed with in-padding information insertion portions 11-1 to 11-n, internal packet producing portions 12-1 to 12-n, internal packet extracting portions 14-1 to 14-n, in-padding information extracting portions 15-1 to 15-n, input buffers 16-1 to 16-n, large capacity input packet buffers 17-1 to 17-n, output packet scheduling portions 18-1 to 18-n, large capacity output packet buffers 19-1 to 19-n, segment portions 20-1 to 20-n and reassembling portions 21-1 to 21-n, respectively.

The input buffers 16-1 to 16-n are adapted to perform a scheduling within the switch portion 2. The output packet scheduling portions 18-1 to 18-n perform a priority control by taking quality of service requested in flow unit into consideration, a packet flow rate control according to a preliminarily defined band or BP (Back Pressure) control to stop an output of packet to a specific circuit according to a packet storing state of the input buffers 16-1 to 16-n.

Each of the shaping weight calculation portions 13-1 to 13-n performs a rate calculation by using a feedback type rate control system. Each of the in-padding information inserting portions 11-1 to 11-n inputs an information required between the respective IF portions 1-1 to 1-n to the padding portion. Each of the in-padding information extracting portions 15-1 to 15-n extracts necessary information from the packet received from the switch portion 2.

Each of the segment portions 20-1 to 20-n divides a variable length packet to fixed length packets. The reassembling portion 21-1 to 21-n reassembles the fixed length packets to the variable length packet.

Each of the internal packet producing portions 12-1 to 12-n produces an internal packet for transmission of information when padding does not occur. Each of the internal packet extracting portions 14-1 to 14-n extracts an information from the internal packet.

FIG. 2 shows an operation of one (20) of the segment portions 20-1 to 20-n shown in FIG. 1. In FIG. 2, the segment portion 20 divides the variable length packet to fixed length packets each having a padding portion.

FIG. 3 is a block diagram showing a construction of one of the in-padding information inserting portions 11-1 to 11-n shown in FIG. 1. In FIG. 3, the in-padding information inserting portion is constructed with packet multiplexing portions 31 and 32, an information inserting portion 33, a padding detecting portion 34 and a timer 35.

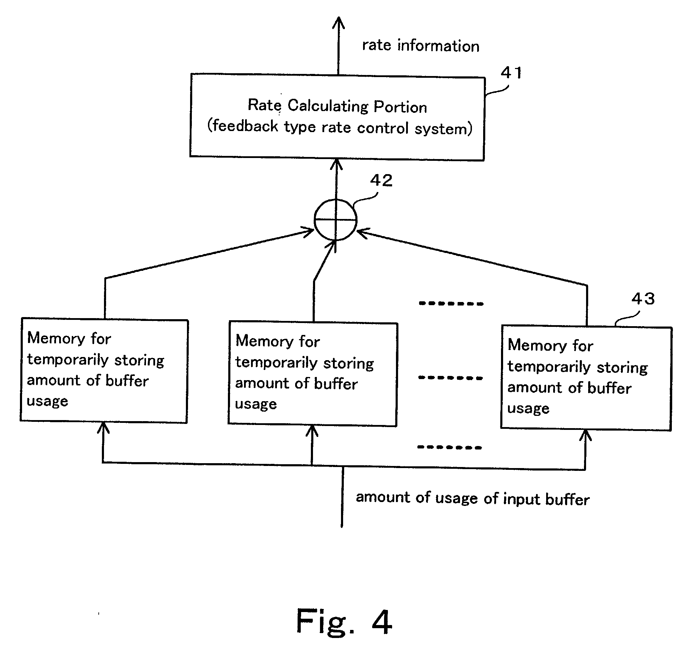

FIG. 4 is a block diagram showing a construction of one of the shaping weight calculation portion 13-1 to 13-n shown in FIG. 1. In FIG. 4, each of the shaping weight calculation portions 13-1 to 13-n is constructed with a rate calculation portion (feedback type rate control system) 41, an adder 42 and a memory 43 for temporarily storing an amount of buffer usage for IF portions #1 to IF portion #n.

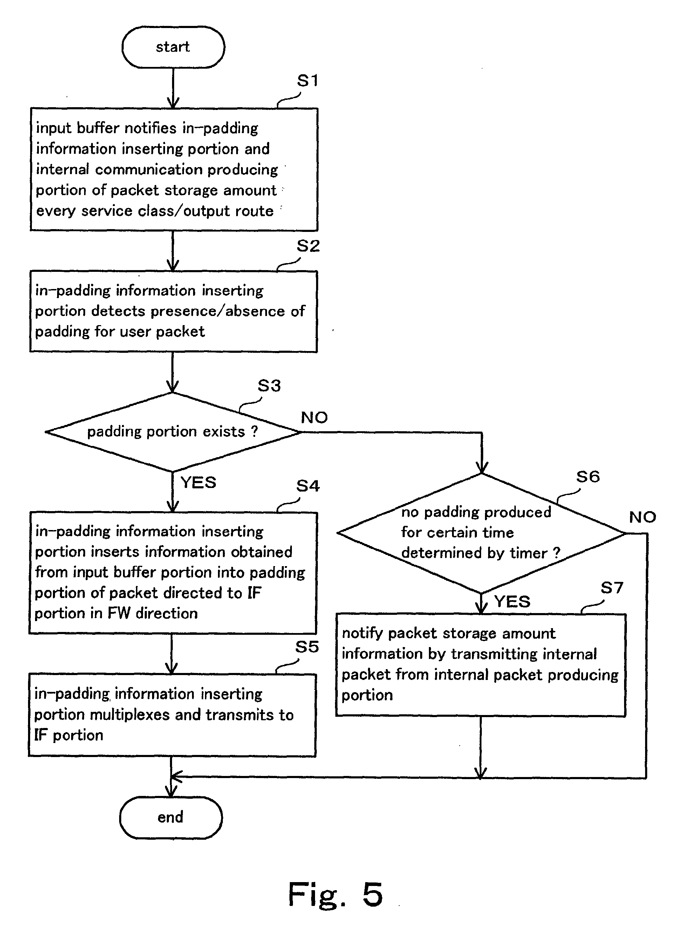

FIG. 5 to FIG. 8 are flowcharts showing an operation of the packet communication system according to an embodiment of the present invention. The operation of the packet communication system of the present invention will be described with reference to FIG. 1 to FIG. 8.

In the input buffers 16-1 to 16-n, the packet storage amount information for every service class/output route are sent to the in-padding information inserting portions 11-1 to 11-n and the internal packet producing portions 12-1 to 12-n, respectively (Step S1 in FIG. 5).

In each of the in-padding information inserting portions 11-1 to 11-n, the padding detector 34 detects presence or absence of padding of a user packet (Step S2 in FIG. 5). When there is a padding portion (YES in Step S3 in FIG. 5), the information insertion portion 33 inserts the information obtained from the input buffer portions 16-1 to 16-n into the padding portion of the packet directed to the respective IF portions 1-1 to 1-n in FW (Forward) direction (Step S4 in FIG. 5) and then the padding portion is transmitted to the respective IF portions 1-1 to 1-n by multiplexing in the packet multiplexing portion 32 (Step 5 in FIG. 5).

When a padding is not produced for a certain time determined by the timer 35 (YES in Step S6 in FIG. 5), notice of the packet storage amount information is performed by transmitting the internal packet from the internal packet producing portions 12-1 to 12-n (Step S7 in FIG. 5).

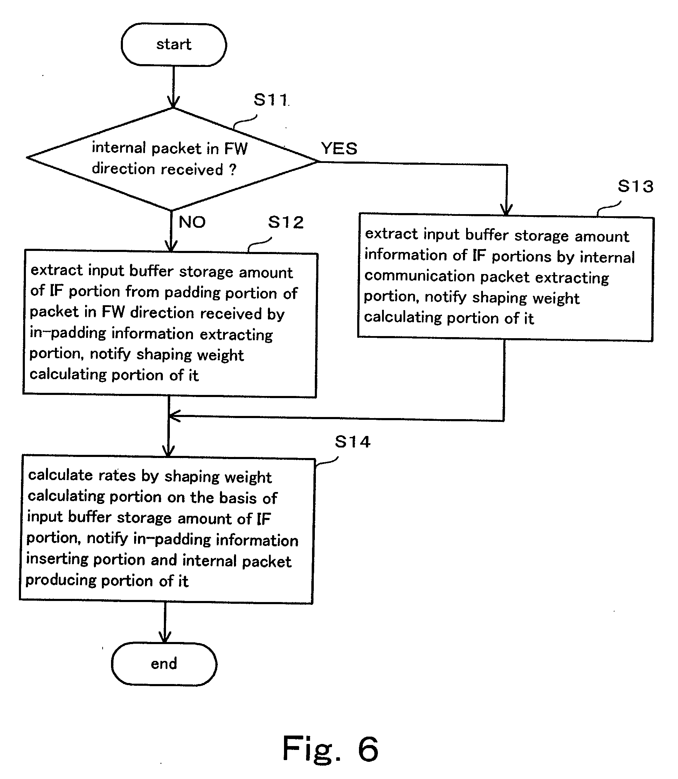

The in-padding information extracting portions 15-1 to 15-n extract the input buffer storage amount of the respective IF portions 1-1 to 1-n from the padding portions of the received packet in FW direction and notify the shaping weight calculation portions 13-1 to 13-n of the input buffer storage amount (Step S12 in FIG. 6). When the internal packet in FW direction is received (YES in Step S11 in FIG. 6), the internal packet extracting portions 14-1 to 14-n extract the input buffer storage amounts of the respective IF portions 1-1 to 1-n and transmit them to the shaping weight calculation portions 13-1 to 13-n (Step S13 in FIG. 6).

The shaping weight calculation portions 13-1 to 13-n perform the rate calculation on the basis of the input buffer storage amounts of the respective IF portions 1-1 to 1-n and transmit the calculated rates to the in-padding information inserting portions 11-1 to 11-n and the internal packet producing portions 12-1 to 12-n (Step S14 in FIG. 16).

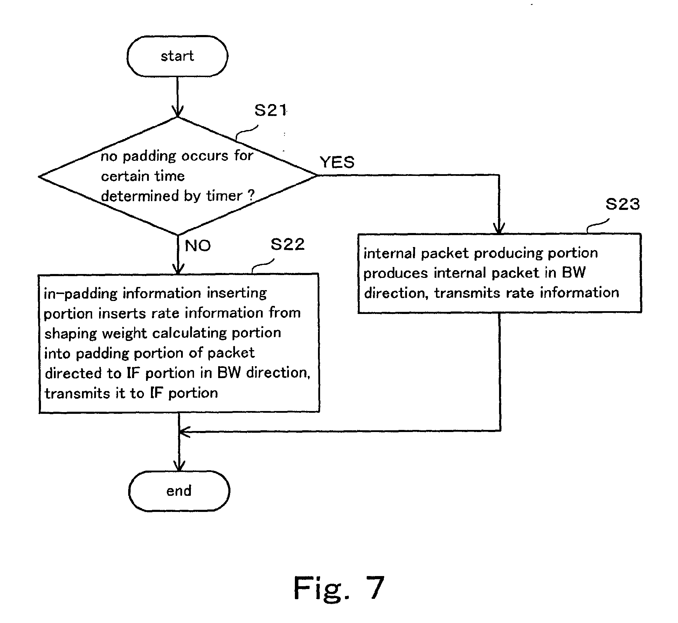

The in-packet information inserting portions 11-1 to 11-n insert the rate information from the shaping weight calculation portions 13-1 to 13-n into the padding portions of the packets directed to the respective IF portions 1-1 to 1-n in BW (backward) direction and transmit the packets to the respective IF portions 1-1 to 1-n (Step S22 in FIG. 7). When padding is not produced for a certain time determined by the timer 35 (Step S21 in FIG. 7), the internal packet producing portions 12-1 to 12-n produce the internal packet in BW direction and transmit the rate information (Step S23 in FIG. 7).

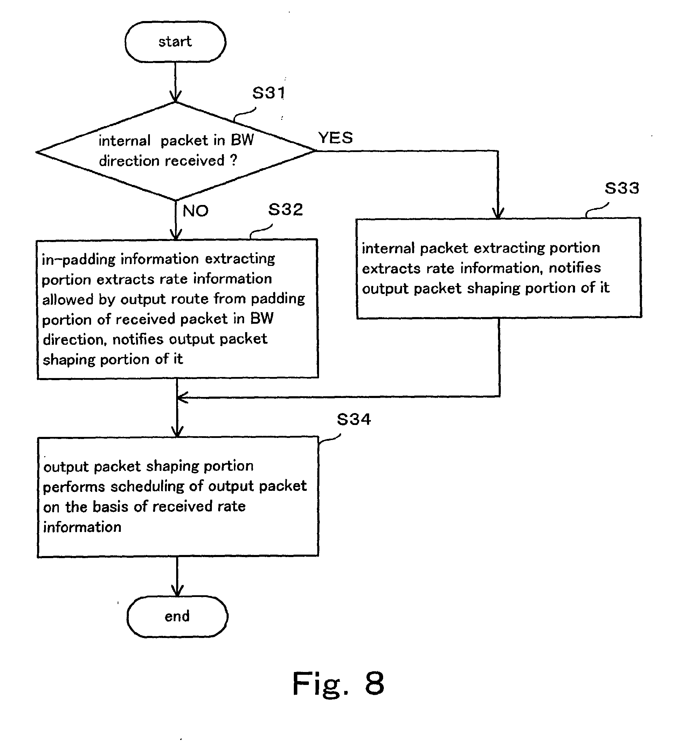

The in-padding information extracting portions 15-1 to 15-n extract the rate information accepted by the respective output routes from the received padding portions of the packets in BW direction and transmit them to the output packet shaping portions 18-1 to 18-n (Steps S31 and S32 in FIG. 8). When the internal packet in BW direction is received (Step S31 in FIG. 8), the internal packet extracting portions 14-1 to 14-n extract the rate information and transmit them to the output shaping portions 18-1 to 18-n (Step S33 in FIG. 8). The output packet shaping portions 18-1 to 18-n perform the scheduling of the output packet on the basis of the received rate information (Step S34 in FIG. 8).

In this embodiment, the IP routing system having a plurality of input/output parts, the switch portion 2, which can not hold an enough empty band, for performing the fixed length switching and the IF portions 1-1 to 1-n arranged for the respective input/output parts is connected to the terminals 4-1 to 4-n through the IP networks 3-1 to 3-n.

The IF portion 1-1 notifies the in-padding information inserting portion 11-1 and the internal packet producing portion 12-1 of the packet storage amount of the input buffer 16-1 for every output route/service class. The in-padding information inserting portion 11-1 inserts the packet storage amount information received from the input buffer 16-1 into the padding portion produced when the segment portion 20-1 segments the variable length packet to the fixed length packet and transmits the resultant packet to the switch portion 2.

By inserting the packet storage amount information into the padding portion and transmitting it to the switch portion 2, it is possible to perform a communication without using extra band. Further, when the padding is not produced, the internal packet producing portion 12-1 produces the internal packet and the input buffer storage amount is transmitted to the switch portion 2 by the internal packet in FW direction. In such case, since the padding is not produced, empty band is provided in the switch portion 2 and a communication is possible by using not the extra band in the switch portion 2 but the empty band thereof.

In the IF portion 1-2, the packet storage amount of the input buffer 16-2 is transmitted to the switch portion 2 by the padding portion of the packet in FW direction or the internal packet in FW direction in the similar manner to that mentioned above.

The operation of the IF portion 1-n is similar to that mentioned above. In the IF portion 1-n, the packet storage amount information of the input buffers 16-1 to 16-n is extracted from the padding portion of the packet in FW direction received by the padding information extracting portion 15-n and is transmitted to the shaping weight calculation portion 13-n.

When the internal packet in FW direction is received, the packet storage amount information of the input buffers 16-1 to 16-n of the IF portions 1-1 to 1-n are extracted by the internal packet extracting portion 14-n and transmitted to the shaping weight calculating portion 13-n.

In the IF portion 1-1 and the IF portion 1-2, similar processing is performed. In this embodiment, however, since the information, which is effective for the IF portion 1-1 and the IF portion 1-2, does not exist in the packet in FW direction, subsequent processing is not performed.

The shaping weight calculation portion 13-n of the IF portion 1-n temporarily stores the packet storage amount information from the IF portions 1-1 to 1-n in the temporary memory 43. A total of the packet storage amount information is calculated in a constant period by using the adder 42 and the rate is calculated on the basis of the total by the rate calculation portion 41 of the feedback type rate control system. The resultant rate information is transmitted to the in-padding information inserting portion 11-n and the internal packet producing portion 12-n in BW direction.

The in-padding information inserting portion 11-n in BW direction inserts the rate information from the shaping weight calculation portion 13-n into the padding portion of the packet to the respective IF portions 1-1 to 1-n and transmits it to the switch portion 2. In this case, too, the internal packet is produced and transmitted, when no padding is produced.

In the IF portion 1-1 and the If portion 1-2, the in-padding information extracting portions 15-1 and 15-2 extract the rate information from the padding portions of the packets in BW direction and transmit them to the output packet scheduling portions 18-1 and 18-2.

When the internal packet in BW direction is received, the internal packet extracting portions 14-1 and 14-2 extract the rate information and transmit them to the output packet scheduling portions 18-1 and 18-2. The output packet scheduling portions 18-1 and 18-2 perform the scheduling of the output on the basis of the received rate information. This is the same for the IF portion 1-n.

By transmitting the amount of buffer usage for every output route/service class between the IF portions 1-1 to 1-n by using the padding portions in this manner, it becomes possible to perform the rate calculation by taking the impartiality between flows into consideration without using the extra band in the switch portion 2.

When there is no padding produced, empty band is provided in the switch portion 2 and a communication between the IF portions 1-1 to 1-n is possible by using the empty band. Therefore, the rate calculation giving consideration to impartiality between flows becomes possible. Consequently, it is possible, in the IP switch, to perform the rate control in such a way that the throughput between flows becomes impartial without lowering throughput of the user traffic.

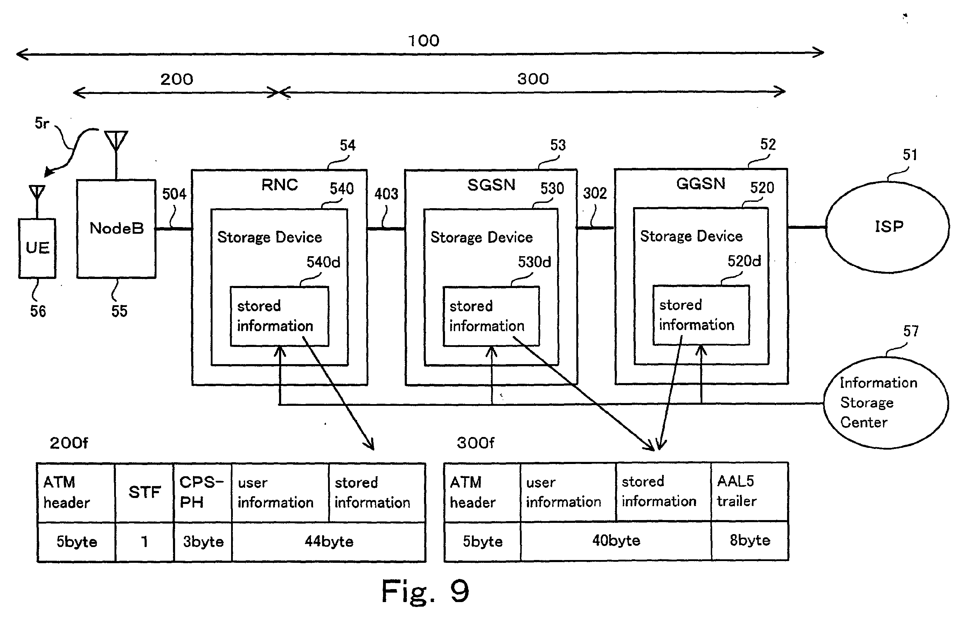

FIG. 9 is a block diagram showing a construction of a packet type mobile telecommunication system according to another embodiment of the present invention. According to the system 100 shown in FIG. 9, the effective utilization of the padding portions of AAL type 5 format 300f and AAL type 2 format 200f in the respective AAL type 5 transmission section 300 and AAL type 2 transmission section and the improvement of the ATM transmission efficiency as the system can be achieved.

In FIG. 9, the packet type mobile telecommunication system 100 is constructed with an ISP 51, which is another packet switch network gateway switch by a GGSN 52, the GGSN 52 for performing a gateway switching between a mobile packet communication network and another packet communication network, a SGSN 53 for establishing a communication between mobile subscribers or between a mobile subscriber and a fixed network subscriber, a RNC 54 for establishing a communication to a radio base station (Node B) 55 and controlling a switching of communication between mobile subscribers or between a mobile subscriber and a fixed network subscriber and a channel switching, the radio base station 55 for establishing a radio communication to a mobile telephone terminal (UE) 56 in a service area, the mobile telephone terminal 56 owned by a connected subscriber and an information storage center 57.

The GGSN 52, the SGSN 53 and the RNC 54 include storage devices 520, 530 and 540, respectively. Each of these storage devices 520, 530 and 540 stores a small capacity, non-real time user information transmitted from the information storage center 57 or other storage device or a system information as a stored information.

The user information is a small capacity, non-real time information to be transmitted to the mobile telephone terminal 56, such as advertisement information, whether information and news, etc. The system information is a small capacity, non real time information to be transmitted to the GGSN 52, the SGSN 53 and the RNC 54, such as statistical data to be transferred between the devices, etc.

The AAL type 5 format 300f is composed of an ATM header (5 bytes), a user information + padding area (40 bytes) and an AAL 5 trailer (8 bytes) and the AAL type 2 format 200f is composed of an ATM header (5 bytes), an STF (1 byte), a CPS-PH (3 bytes) and a user information + padding area (44 bytes).

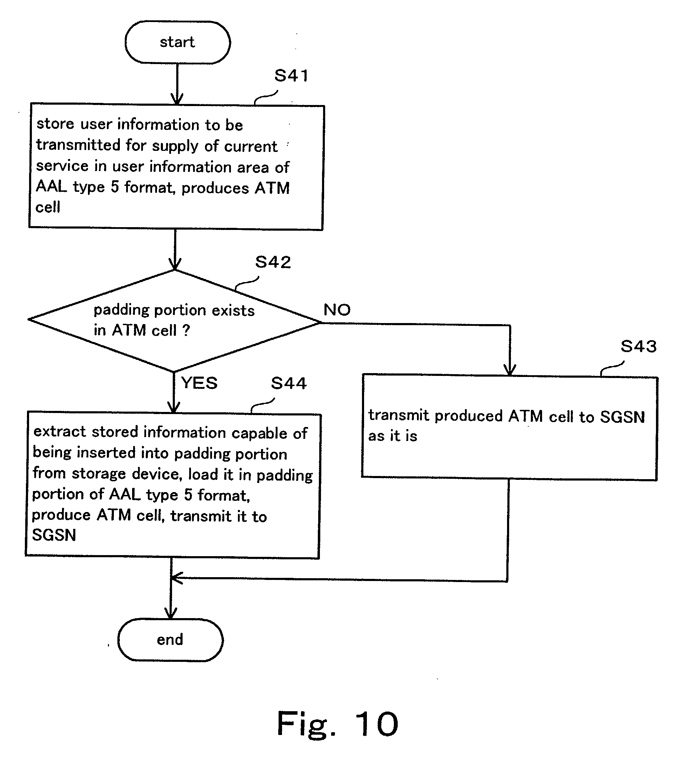

FIG. 10 to FIG. 14 are flowcharts showing an operation of the packet type mobile telecommunication system 100. The operation of the packet type mobile telecommunication system 100 will be described with reference to FIG. 9 to FIG. 14.

When the mobile telephone terminal 56 receives Internet or moving picture service from the ISP 51, the ISP 51 transmits a user information to the GGSN 52 according to the request of the mobile telephone terminal 56 and the GGSN 52 stores the user information to be transmitted for supplying the current service in a user information area of the AAL type 5 format 300f and produces an ATM cell (Step S41 in FIG. 10).

Simultaneously therewith, the GGSN 52 determines whether or not a padding portion to which a padding data is to be inserted exists in the ATM cell. When the padding portion does not exist (NO in Step S42 in FIG. 10), the GGSN 52 transmits the produced ATM cell to the SGSN 53 as it is (Step S43 in FIG. 10). When the padding portion exists (YES in Step S42 in FIG. 10), the GGSN 52 extracts a stored information 520d capable of being inserted into the padding portion from the storage device 520, loads it in the padding portion of AAL type 5 format 300f, produces the ATM cell and transmits it to the SGSN 53 (Step S44 in FIG. 10).

The SGSN 53 determines whether the information inserted into the padding portion of AAL type 5 format 300f transmitted from the GGSN 52 is a padding data, a stored information to the SGSN 53 or a stored information directed to other than the SGSN 53.

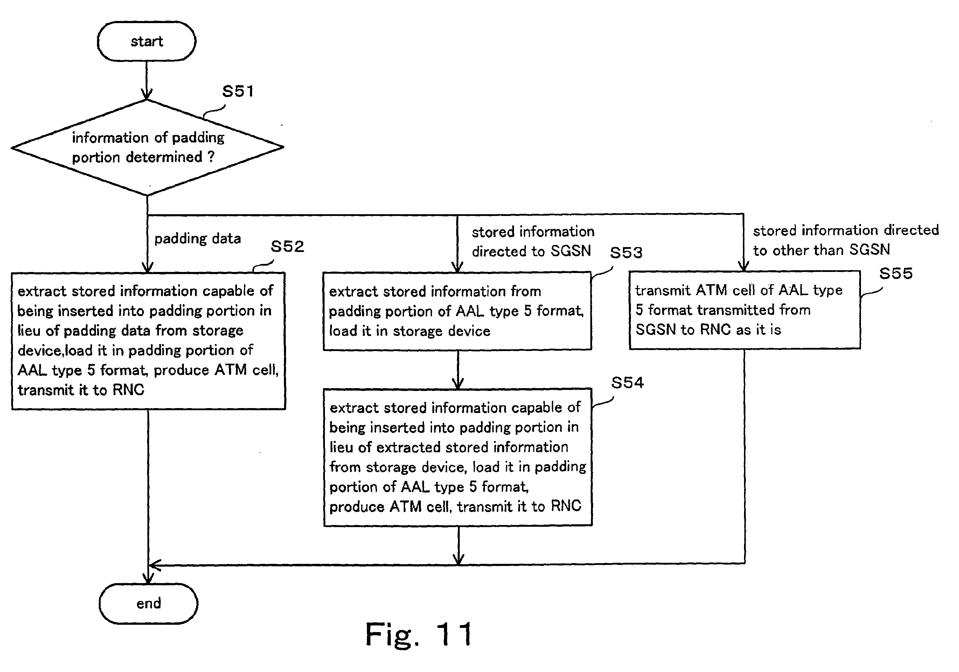

When the information is the padding data (Step S51 in FIG. 11), the SGSN 53 extracts a stored information 530d, which can be inserted into the padding portion in lieu of the padding data, from the storage device 530, loads it in the padding portion of AAL type 5 format 300f, produces the ATM cell and transmits it to the RNC 54 (Step S52 in FIG. 11).

When the information is a stored information to the SGSN 53 (Step S51 in FIG. 11), the SGSN 53 derives the stored information from the padding portion of AAL type 5 format 300f and stores it in the storage device 530 (Step S53 in FIG. 11). Thereafter, the SGSN 53 extracts the stored information 530d, which can be inserted into the padding portion instead of the derived stored information, from the storage device 530, loads it in the padding portion of AAL type 5 format 300f, produce an ATM cell and transmits it to the RNC 54 (Step S54 in FIG. 11).

When the stored information is one directed to other than the SGSN 53 (Step S51 in FIG. 11), the SGSN 53 transmits the ATM cell of AAL type 5 format 300f transmitted from the GGSN 52 to the RNC 54 as it is (Step S55 in FIG. 11).

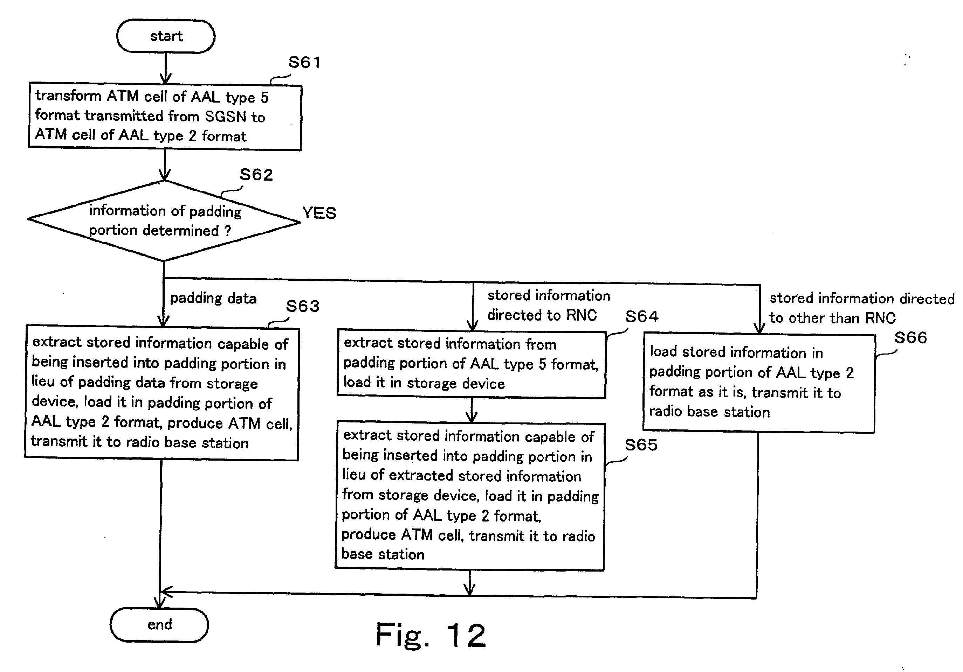

The RNC 54 transforms the ATM cell of AAL type 5 format 300f to the ATM cell of AAL type 2 format 200f (Step S61 in FIG. 12). Simultaneously therewith, the RNC 54 determines whether the information inserted into the padding portion of the AAL type 5 format 300f transmitted from the SGSN 53 is a padding data, a stored information directed to the RNC 54 or a stored information directed to other than the RNC 54.

When the stored information is the padding data (Step S62 in FIG. 12), the RNC 54 extracts a stored information 540d capable of being inserted into the padding portion instead of the padding data from the storage device 540, loads it in the padding portion of the AAL type 2 format 200f, produces the ATM and transmits it to the radio base station 5 (Step S63 in FIG. 12).

When the stored information is a stored information directed to the RNC 54 (Step S62 in FIG. 12), the RNC 54 extracts the stored information 540d capable of being inserted into the padding portion instead of the extracted stored information from the storage device 540, loads it in the padding portion of the AAL type 2 format 200f, produces the ATM cell and transmits it to the radio base station 55 (Step S65 in FIG. 12).

When the stored information is a stored information directed to other than the RNC 54 (Step S62 in FIG. 12), the RNC 54 loads the stored information in the padding portion of the AAL type 2 format 200f as it is and transmits to the radio base station 55 (Step S66 in FIG. 12).

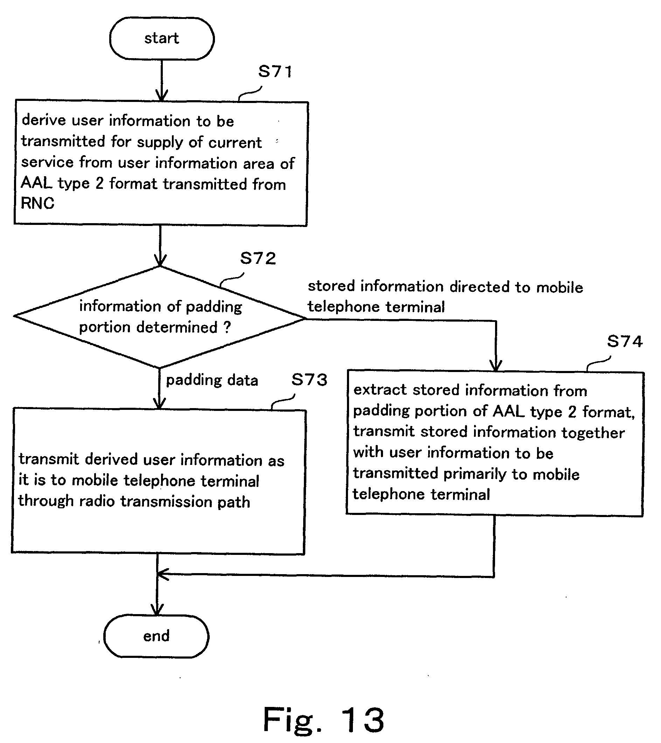

The radio base station 55 extracts a user information to be transmitted for supply of the current service from the user information area of the AAL type 2 format 200f transmitted from the RNC 54 (Step S71 in FIG. 13). Simultaneously therewith, the radio base station 55 determines whether the information in the padding portion of the AAL type 2 format 200f transmitted from the RNC 54 is a padding data or a stored information directed to the mobile telephone terminal 56.

When it is the padding data (Step S72 in FIG. 13), the radio base station 55 transmits the extracted user information to the mobile telephone terminal 56 through the radio transmission path 5r as it is (Step S73 in FIG. 13). Further, when it is a stored information directed to the mobile telephone terminal 56 (Step S72 in FIG. 13), the radio base station 55 further extracts the stored information from the padding portion of the AAL type 2 format 200f and transmits it together with the user information to be transmitted primarily to the mobile telephone terminal 56 through the radio transmission path 5r (Step S74 in FIG. 13).

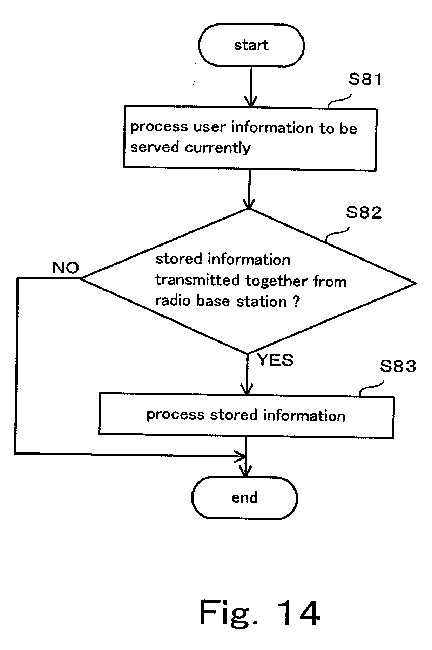

The mobile telephone terminal 56 performs the processing of the user information to be supplied with the current service (Step S81 in FIG. 14) and, simultaneously therewith, performs a processing of a stored information (Step S83 in FIG. 14) if the latter information is transmitted from the radio base station 55 together (Step S82 in FIG. 14).

As described, in the packet type mobile telecommunication system 100 according to this embodiment in which data is transmitted according to the ATM system, by transmitting a small capacity, non-real time information from the information storage center 57 to the storage devices 520, 530 and 540 in the GGSN 52, the SGSN 53 and the RNC 54, the ATM transmission path can not be occupied by small capacity, non-real time transmission.

Further, in this embodiment, it is possible to improve the ATM transmission efficiency as a system to thereby restrict the system cost by inserting the stored information into a padding portion of an ATM cell when the mobile telephone terminal 56 transmits the user information to be supplied with a real time service in the padding portion of the ATM cell.

The present invention is not limited to the described embodiments and the embodiments can be modified within the scope of the present invention.

As described hereinbefore, according to the packet communication system of the present invention, it is possible to realize a system having superior impartiality of throughput between flows without degrading the switch characteristics by inserting an information required in an internal rate control into a padding portion of an IP packet, to which dummy data is added , in each of a plurality of interface portions, extracting the information inserted into the padding portion of the IP packet, calculating the rate on the basis of the extracted information and transmitting an information required for performing the internal rate control by using the padding portion between a plurality of the interface portions.

Further, according to the packet communication system of the present invention, for performing a data transmission according to an ATM system by using a mobile packet communication network for establishing a communication between mobile subscribers and a communication between a mobile subscriber and a fixed network subscriber, a gateway mobile communication network for performing a gateway switch between a mobile packet communication network and another packet communication network and a radio network control device for establishing a communication to a radio base station and performing a channel switch control of a connection and a channel switching of communications between the mobile subscribers and between the mobile subscriber and the fixed network subscriber, it is possible to utilize the padding portion effectively to thereby improve the ATM transmission efficiency by storing an information transmitted from any of an information storage center for storing at least one of a small capacity, non-real time user information and a system information and storage devices provided in the gateway mobile communication network, the mobile packet communication switch and the radio network control device, respectively, for storing at least one of a small capacity, non real time user information and a system information, in the storage device as a stored information.

## Claims

1. A packet communication system in which a packet is transferred between devices constituting said system by adding dummy data to an empty area of a packet data, comprising means provided in each of said devices for inserting an information transferred between at least said devices into a padding portion to which the dummy data is added and transferring the packet and means provided in each of said devices for extracting the information transferred between said devices from said padding portion of said packet data transferred.

2. A packet communication system as claimed in claim 1, wherein the information transferred between said devices is an information necessary to performing an internal rate control.

3. A packet communication system as claimed in claim 1, wherein the information transferred between said devices is at least one of a small capacity, non-real time user information and a system information.

4. A packet communication system comprises a plurality of interface portions each including in-padding information inserting means for inserting an information necessary for performing an internal rate control into a padding portion to which dummy data of an IP (Internet Protocol) packet is to be added, in-padding information extracting means for extracting the information inserted into said padding portion and shaping weight calculating means for calculating a rate on the basis of the information extracted by said in-padding extracting means, the information necessary for performing the internal rate control being transmitted by using said padding portion between the plurality of said interface portions.

5. A packet communication system as claimed in claim 4, wherein each said interface portion includes internal packet producing means for producing an internal packet for transmitting an information necessary for performing the internal rate control when said padding portion is absent and internal packet extracting means for extracting the information necessary for performing said internal rate control from the internal packet when the internal packet is transferred, the information necessary for performing the internal rate control being transferred by the internal packet when a padding is not produced.

6. A packet communication system for performing a data transmission according to an ATM (Asynchronous Transfer Mode) system by using a mobile packet communication network for establishing a communication between mobile subscribers and a communication between a mobile subscriber and a fixed network subscriber, a gateway mobile communication network for performing a gateway switch between a mobile packet communication network and another packet communication network and a radio network control device for establishing a communication to a radio base station and performing a channel switch control of a connection and a channel switching of communications between said mobile subscribers and between said mobile subscriber and said fixed network subscriber, said packet communication system comprising an information storage center for storing at least one of a small capacity, non-real time user information and a system information and storage devices provided in said gateway mobile communication network, said mobile packet communication switch and said radio network control device, respectively, for storing at least one of a small capacity, non-real time user information and a system information, an information transferred from any of said information storage center and said storage devices being stored in said storage devices as stored information.

7. A packet communication system as claimed in claim 6, wherein said gateway mobile communication network determines whether or not a padding portion to be inserted with a padding data, which is dummy data, exists in an ATM cell when a user information received from an ISP (Internet Service Provider) for supplying with a current service is transformed to the ATM cell by storing it in a user information area of AAL (ATM Adaptation Layer) type 5 format, transmits the ATM cell to said mobile packet communication switch as it is when the padding portion is absent, extracts a stored information capable of being inserted into said padding portion, loads it in a padding portion of the AAL type 5 format and transmits it to said mobile packet communication switch when the padding exists.

8. A packet communication system as claimed in claim 7, wherein said mobile packet communication switch
determines whether the information in the padding portion of the AAL type 5 format received from said gateway mobile communication network is said passing data, a stored information directed to its own station or a stored information directed to other station;
when the information is the padding data, extracts a stored information capable of being inserted into said padding portion in lieu of said padding data from said storage device, loads it in a padding portion of the AAL type 5 format and, after the ATM cell is produced, transmits the ATM cell to said radio network control device;
when the information is a stored information directed to its own station, derives a stored information from a padding portion of the AAL type 5 format, stores it in said storage device, extracts a stored information capable of being inserted into said padding portion in lieu of the derived stored information, loads it in said derived padding portion of the AAL type 5 format, produces the ATM cell and then transmits it to said radio network control device; and
when the information is a stored information directed to other station, transmits it to said radio network control device as it is.

9. A packet communication system as claimed in claim 8, wherein said radio network control device
determines whether an information inserted into a padding portion of the AAL type 5 format received from said mobile packet communication switch when an ATM cell of the AAL type 5 format received from said mobile packet communication switch is transformed to an ATM of AAL type 2 format is the padding data, a stored information directed to its own station or a stored information directed to other station;
when the information is the padding data, extracts a stored information capable of being inserted into said padding portion in lieu of said padding data from said storage device, loads it in a padding portion of the AAL type 2 format and, after the ATM cell is produced, transmits the ATM cell to said radio network control device;
when the information is a stored information directed to its own station, derives a stored information from a padding portion of the AAL type 5 format, stores it in said storage device, extracts a stored information capable of being inserted into said padding portion in lieu of the derived stored information, loads it in said derived padding portion of the AAL type 2 format, produces the ATM cell and then transmits it to said radio network control device; and
when the information is a stored information directed to other station, loads the stored information in the padding portion of the AAL type 2 format as it is and transmits it to said radio network control device.

10. A packet communication system as claimed in claim 9, wherein said radio base station
determines whether an information inserted into a padding portion of the AAL type 2 format received from said mobile packet communication switch when a user information to be transmitted for supplying a current service is derived from a user information area of the ATM cell of the AAL type 2 format received from said mobile packet communication switch is a padding data or a stored information directed to a mobile telephone terminal;
when the information is the padding data, transmits the derived user information as it is to said mobile telephone terminal through a radio transmission path; and
when the information is a stored information directed to said mobile telephone terminal, derives a stored information from a padding portion of the AAL type 2 format and transmits it together with the user information to be transmitted primarily to said mobile telephone terminal through a radio transmission path.

11. A packet communication system as claimed in claim 10, wherein, in a case where the stored information is transmitted together with the user information when a processing of the user information, which is to be supplied with the current service and received from said radio base station, said mobile telephone terminal performs a processing of the stored information.

12. A packet communication method for transferring a packet data by adding dummy data to an empty area of a packet, comprising, in each of constitutional devices of a packet communication system, the step of inserting at least an information transferred between said constitutional devices of said system into a padding portion to which said dummy data is added and transmitting it and the step of extracting the information transferred between said constitutional devices from said padding portion of said transmitted packet data.

13. A packet communication method as claimed in claim 12, wherein the information transferred between said constitutional devices is an information required to perform an internal rate control.

14. A packet communication method as claimed in claim 12, wherein the information transferred between said constitutional devices is at least one of a small capacity, non-real time user information and a system information.

15. A packet communication method comprising the steps of, in each of a plurality of interface portions, inserting an information required for performing an internal rate control into a padding portion of IP packet to which dummy data is added, extracting the information inserted into the padding portion of the IP packet and calculating a rate on the basis of the extracted information, the information required for performing the internal rate control being transmitted between said interface portions by using the padding portion.

16. A packet communication method as claimed in claim 15, further comprising the steps of, in each of said interface portions, producing an internal packet for communicating the information required for performing the internal rate control when there is no padding portion, extracting the information required for performing the internal rate control from the internal packet when the internal packet is transferred, the information required for performing the internal rate control being transmitted by using the internal packet when there is no padding produced.

17. A packet communication method for performing a data transmission according to ATM (Asynchronous Transfer Mode) by using a mobile packet communication network for establishing a communication between mobile subscribers and between a mobile subscriber and a fixed network subscriber, a gateway mobile communication network for performing a gateway switch between said mobile packet communication network and other packet communication network and a radio network control device for establishing a communication to a radio base station and performing a connection and channel switch control of the communication between the mobile subscribers and the communication between the mobile subscriber and the fixed network subscriber, wherein an information transmitted from any one of an information storage center for storing at least one of a small capacity, non-real time user information and a system information and a storage device provided in each of said gateway mobile communication network, said mobile packet communication switch and the radio network control device for storing at least one of the small capacity, non-real time user information and the system information is stored in said storage device as a stored information.

18. A packet communication system as claimed in claim 17, further comprising, in said gateway mobile communication network, the steps of determining whether or not a padding portion in an ATM cell to which a padding data as dummy data is to be inserted when a user information received from ISP (Internet Service Provider) for supplying a current service is stored in a user information area of AAL (ATM Adaptation Layer) type 5 format to transform it to an ATM cell, transmitting the ATM cell to said mobile packet communication switch as it is when there is no padding portion and extracting a stored information capable of being inserted into the padding portion from said storage device, storing it in the padding portion of AAL type 5 format and transmitting it to said mobile packet communication switch when there is the padding portion.

19. A packet communication method as claimed in claim 18, further comprising, in said mobile packet communication switch, the step of determining whether or not an information inserted into the padding portion of AAL type 5 format received from said gateway mobile communication network is the padding data, a stored information directed to own station or a stored information directed to other station, the step of extracting a stored information capable of being inserted into the padding portion in lieu of the padding data from said storage device, storing it in the padding portion of AAL type 5 format, producing the ATM cell and then transmitting it to said radio network control device when the information is the padding data, the step of deriving the stored information from the padding portion of AAL type 5 format, storing it in said storage device, extracting a stored information capable of being inserted into the padding portion in lieu of the derived stored information, storing it in the padding portion of ATM type 5 format , producing the ATM cell and then transmitting it to said radio network control device when the information is a stored information directed to own station, and the step of transmitting the information to said radio network control device as it is when the information is a stored information directed to other station.

20. A packet communication method as claimed in claim 19, further comprising, in said radio network control device, the steps of:
determining whether an information inserted into a padding portion of the AAL type 5 format received from said mobile packet communication switch when an ATM cell of the AAL type 5 format received from said mobile packet communication switch is transformed to an ATM of AAL type 2 format is the padding data, a stored information directed to its own station or a stored information directed to other station;
when the information is the padding data, extracting a stored information capable of being inserted into said padding portion in lieu of said padding data from said storage device, storing it in a padding portion of the AAL type 2 format and, after the ATM cell is produced, transmitting the ATM cell to said radio base station;
when the information is a stored information directed to its own station, deriving a stored information from a padding portion of the AAL type 5 format, storing it in said storage device, extracting a stored information capable of being inserted into said padding portion in lieu of the derived stored information, storing it in said derived padding portion of the AAL type 2 format, producing the ATM cell and then transmitting it to said radio base station; and
when the information is a stored information directed to other station, storing the stored information in the padding portion of the AAL type 2 format as it is and transmitting it to said radio base station.

21. A packet communication method as claimed in claim 20, further comprising, in said radio base station, the steps of:
determining whether an information inserted into a padding portion of the AAL type 2 format received from said mobile packet communication switch when a user information to be transmitted for supplying a current service is derived from a user information area of the ATM cell of the AAL type 2 format received from said mobile packet communication switch is a padding data or a stored information directed to a mobile telephone terminal;
when the information is the padding data, transmitting the derived user information as it is to said mobile telephone terminal through a radio transmission path; and
when the information is a stored information directed to said mobile telephone terminal, deriving a stored information from a padding portion of the AAL type 2 format and transmitting it together with the user information to be transmitted primarily to said mobile telephone terminal through a radio transmission path.

22. A packet communication method as claimed in claim 21, further comprising, in said mobile telephone terminal, the step of performing a processing of the stored information, in a case where the stored information is transmitted together with the user information when a processing of the user information, which is to be supplied with the current service and received from said radio base station.
